# EUROPEAN PATENT SPECIFICATION

(11) **EP 2 896 799 B1**
(45) Date of publication and mention of the grant of the patent: **12.04.2017**
(21) Application number: 12872311.1
(22) Date of filing: 13.09.2012
(51) Int. Cl.: F01N 3/08, F01N 3/20, F01N 13/00, F01N 11/00

(54) **ADDITIVE SUPPLY DEVICE**
ADDITIVZUGABEVORRICHTUNG
DISPOSITIF D'ALIMENTATION EN ADDITIF

(43) Date of publication of application: 22.07.2015
(73) Proprietor: TOYOTA JIDOSHA KABUSHIKI KAISHA, Toyota-shi, Aichi-ken, 471-8571 (JP)
(72) Inventor: OTA, Hirohiko, Toyota-shi, Aichi-ken, 471-8571 (JP); SUZUKI, Hayato, Toyota-shi, Aichi-ken, 471-8571 (JP)
(74) Representative: Kuhnen & Wacker
(86) International application number: PCT/JP2012/073456
(87) International publication number: WO 2014/041657

(56) References cited:
- WO-A1-2011/148809
- FR-A1- 2 917 791
- JP-A- 2009 046 997
- JP-A- 2010 101 262
- JP-A- 2010 255 608
- JP-A- 2012 137 041
- US-A1- 2012 020 857

## Description

### TECHNICAL FIELD

The present invention relates to an additive feeder.

### BACKGROUND ART

An additive feeder including an addition valve for adding additive to an exhaust passage, a pump connected to the addition valve via a piping, and a control unit that controls driving of the pump to supply the additive to the piping and the addition valve and recover the additive therefrom is known as an additive feeder that adds additive to the exhaust passage of an internal combustion engine. In such an additive feeder, the above described pump is rotated to supply additive to the piping and the addition valve and recover additive from the addition valve and the piping. Patent Document 1 discloses a configuration in which, after recovery of additive is started by rotating a pump when an internal combustion engine in the driving state is stopped, the recovery of the additive is terminated by stopping the rotation of the pump at a time when a predetermined recovery time from the start has elapsed.

Patent Document 2 discloses a SCR system comprising an adhesion prevention system controlling the supply module to return the urea solution from the dosing valve to the urea tank.

### PRIOR ART DOCUMENT

### Patent Document

Patent Document 1: Japanese Laid-Open Patent Publication No. 2008-101564
Patent Document 2: WO 2011/148809 A1

### SUMMARY OF THE INVENTION

### Problems that the Invention is to Solve

As in Patent Document 1, in the case where the above described recovery of the additive is terminated by stopping the rotation of the pump at the time when the above described recovery time has elapsed after the rotation of the pump is started to recover the additive, variation of driving of the pump is caused so that excess or deficiency in the amount of recovery of the above described additive is caused as well. For example, when the rotation speed of the pump in a rotation direction becomes excessively fast due to the above described variation, the above described recovery of the additive is excessively performed so that even the exhaust gas in the exhaust passage is drawn by the pump via the addition valve and the piping. When the exhaust gas of the exhaust passage is drawn by the pump as described above, the pump is caused to idle, or foreign manner in the exhaust gas is caught in the pump to cause lowering of the durability of the pump.

Accordingly, it is an object of the present invention to provide an addition feeder that is capable of limiting suction of exhaust gas from an exhaust passage into a pump when the pump is rotated to recover additive.

### Means for Solving the Problems

According to the additive feeder of the present invention, when the additive is recovered from the addition valve, which adds the additive to the exhaust passage, and the piping, the recovery process is performed, in which the pump is rotated and the additive is recovered from the addition valve and the piping. The additive in the addition valve and the piping is drawn by the pump, and the exhaust gas with a high temperature in the exhaust passage is drawn into the addition valve and the piping by performing the recovery process. A temperature sensor detects the temperature of a predetermined portion in a flow path of the additive from within the pump to within the addition valve while the above described recovery process is performed. When the temperature detected by the temperature sensor becomes a high value greater than or equal to a threshold value, namely when a fluid with a temperature to be detected by the temperature sensor at a portion in which the temperature sensor is provided in the above described flow path of the additive is changed from the additive to the exhaust gas with a temperature higher than that of the additive, the above described recovery process is terminated. Accordingly, after the exhaust gas in the exhaust passage is drawn in by the addition valve and the piping accompanying the recovery of the additive by performing the above described recovery process, the above described recovery process is terminated by actually confirming, on the basis of the temperature detected by the temperature sensor, that such exhaust gas has reached the above described position in which the temperature sensor is provided. The recovery process is terminated as above described to limit the suction of the exhaust gas into the pump, which has been drawn in from the exhaust passage to the addition valve and the piping during the execution of the above described recovery process.

Further, according to the additive feeder according to the present invention, when the additive is recovered from the piping and the addition valve that adds the additive to the exhaust passage, the recovery process is performed in which the pump is rotated to recover the above described additive from the addition valve and the piping. The additive in the addition valve and the piping is drawn by the pump, and the exhaust gas with a high temperature in the exhaust passage is drawn into the addition valve and the piping by performing the recovery process. The temperature sensor detects the temperature of a predetermined portion in the flow path of the additive from within the pump to within the addition valve while the above described recovery process is performed. When the rate of increase of the temperature detected by the temperature sensor becomes a high value greater than or equal to a threshold value, namely when fluid with a temperature to be detected by the temperature sensor at a portion in which the temperature sensor is provided in the above described flow path of the additive is changed from the additive to the exhaust gas with a temperature higher than that of the additive, the above described recovery process is terminated. Accordingly, after the exhaust gas in the exhaust passage is drawn in by the addition valve and the piping accompanying the recovery of the additive by performing the above described recovery process, the above described recovery process is terminated by actually confirming, on the basis of the temperature detected by the temperature sensor, that such exhaust gas has reached the above described position in which the temperature sensor is provided. The recovery process is terminated as above described to limit the suction of the exhaust gas into the pump, which has been drawn in from the exhaust passage to the addition valve and the piping during the above described recovery process.

Further, according to the additive feeder according to the present invention, when the additive is recovered from the piping and the addition valve that adds the additive to the exhaust passage, the recovery process is performed, in which the pump is rotated to recover the above described additive from the addition valve and the piping. The additive in the addition valve and the piping is drawn by the pump, and the exhaust gas with a high temperature in the exhaust passage is drawn into the addition valve and the piping by performing the recovery process. The temperature sensor detects the temperature of a predetermined portion in the flow path of the additive from within the pump to within the addition valve while the above described recovery process is performed. When the amount of increase of the temperature detected by the temperature sensor with respect to a value obtained at a time of starting the recovery of the additive by the above described recovery process becomes a high value greater than or equal to a threshold value, namely when fluid with a temperature to be detected by the temperature sensor at a portion in which the temperature sensor is provided in the above described flow path of the additive is changed from the additive to the exhaust gas with a temperature higher than that of the additive, the above described recovery process is terminated. Accordingly, after the exhaust gas in the exhaust passage is drawn in by the addition valve and the piping accompanying the recovery of the additive by performing the above described recovery process, the above described recovery process is terminated by actually confirming, on the basis of the temperature detected by the temperature sensor, that such exhaust gas has reached the above described position in which the temperature sensor is provided. The recovery process is terminated as above described to limit the drawing of the exhaust gas into the pump, which has been drawn in from the exhaust passage to the addition valve and the piping during the execution of the above described recovery process.

According to an aspect of the present invention, the temperature sensor is provided at a portion in the pump connected to the piping. In this case, when the exhaust gas in the exhaust passage is drawn in by the addition valve and the piping and reaches a portion in the pump connected to the above described piping while the above described recovery process for recovering the additive in the addition valve and the piping is performed, this is reflected on the temperature detected by the temperature sensor. At this time, the recovery of the additive present in the addition valve and the piping has been substantially completed so that the above described recovery process can be terminated in such a state.

According to an aspect of the present invention, the temperature sensor is provided at a portion in the piping connected to the pump. In this case, when the exhaust gas in the exhaust passage is drawn in by the addition valve and the piping and reaches a portion in the piping connected to the above described pump while the above described recovery process for recovering the additive in the addition valve and the piping is performed, this is reflected on the temperature detected by the temperature sensor. At this time, the recovery of the additive present in the addition valve and the piping has been substantially completed so that the above described recovery process can be terminated in such a state.

### BRIEF DESCRIPTION OF THE DRAWINGS

Fig.1 is a diagram schematically illustrating the entire internal combustion engine to which an additive feeder is applied;
Fig. 2 is a flowchart illustrating the procedure of recovering aqueous urea solution in an addition valve and a piping;
Fig. 3 is a flowchart illustrating the procedure of performing the above described recovery of aqueous urea solution;
Fig. 4 is a graph showing the change tendency of a temperature of the addition valve with respect to a change in an ambient temperature and an exhaust gas temperature;
Fig. 5 is a flowchart illustrating the procedure of performing the above described recovery of aqueous urea solution; and
Fig. 6 is a flowchart illustrating the procedure of performing the above described recovery of aqueous urea solution.

### MODES FOR CARRYING OUT THE INVENTION

### First Embodiment

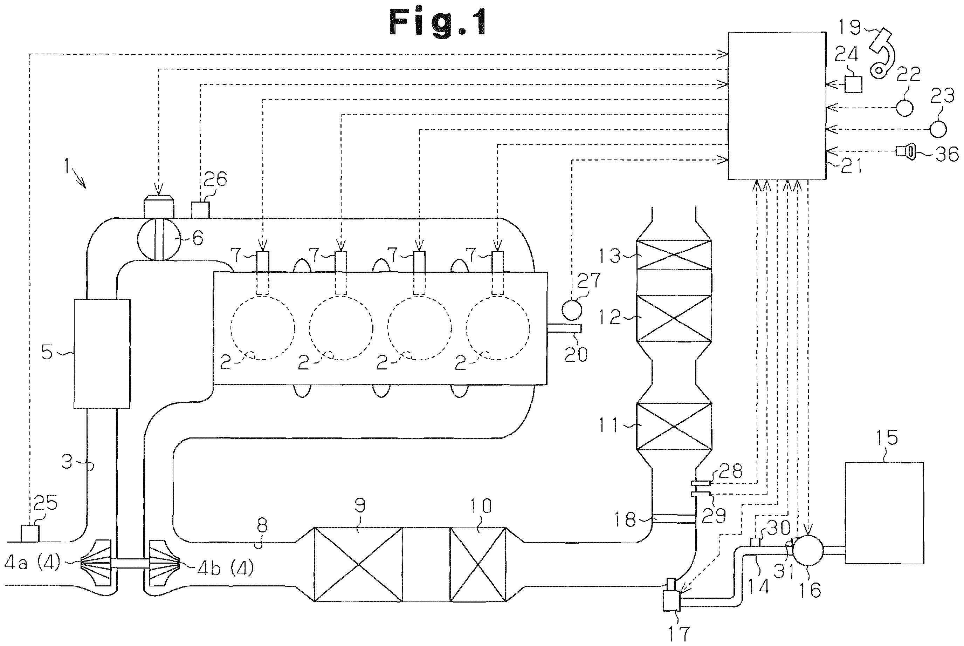

Hereinafter, an additive feeder according to a first embodiment will be described with reference to Figs. 1 to 4.

As shown in Fig. 1, an intake passage 3 is connected to combustion chambers 2 of an internal combustion engine 1 mounted on a vehicle. A compressor wheel 4a of a turbocharger 4, an intercooler 5, and an intake throttle valve 6 are provided in the intake passage 3 from upstream to downstream in this order. Air that has passed through the above described intake passage 3 is suctioned by the combustion chambers 2 of the internal combustion engine 1, and the fuel from fuel injection valves 7 is injected to be supplied to the combustion chambers 2. The fuel burns in the combustion chambers 2 to drive the internal combustion engine 1. In contrast, exhaust gas that has been generated by burning the fuel in the combustion chambers 2 is supplied to an exhaust passage 8 connected to the combustion chambers 2. A turbine wheel 4b of the turbocharger 4, a first oxidation catalyst 9, a filter 10, a first NOx purification catalyst 11, a second NOx purification catalyst 12, and a second oxidation catalyst 13 are provided in the exhaust passage 8 from upstream to downstream in this order.

The above described first oxidation catalyst 9 oxidizes and purifies carbon monoxide (CO) and hydrocarbon (HC), and the above described filter 10 recovers particulate matter (PM) in the exhaust gas. The above described first NOx purification catalyst 11 and the second NOx purification catalyst 12 correspond to selective reduction type catalysts, which reduce and purify the NOx in the exhaust gas using the reducing agent. More specifically, the reducing agent such as aqueous urea solution is added to a section upstream from the first NOx purification catalyst 11 in the exhaust passage 8 so that the reducing agent solution (aqueous urea solution) hydrolyzes in response to the heat of the exhaust gas to generate ammonia (NH₃). The generated ammonia is absorbed by the first NOx purification catalyst 11 and the second NOx purification catalyst 12 so that the NOx is reduced by the catalysts. The NOx in the exhaust gas is purified by the above reduction. The above described second oxidation catalyst 13 oxidizes and processes the ammonia that has been flowed downstream out of the second NOx purification catalyst 12.

An additive feeder for adding the above described reducing agent (aqueous urea solution) as an additive to the exhaust passage 8 is provided in the internal combustion engine 1. The additive feeder is provided with an addition valve 17 for adding aqueous urea solution to a section that is upstream from the first NOx purification catalyst 11 and downstream from the filter 10 in the exhaust passage 8. The aqueous urea solution is added through the addition valve 17 to a section that is upstream from the first NOx purification catalyst 11 and downstream from the filter 10 in the exhaust passage 8. The aqueous urea solution added through the addition valve 17 to the exhaust passage 8 is then dispersed to be finer mist by a dispersion plate 18 provided downstream from the addition valve 17 and upstream from the first NOx purification catalyst 11. The additive feeder is also provided with a pump 16 connected to the addition valve 17 via a piping 14, and a tank 15 connected to the pump 16, which stores aqueous urea solution therein. In the additive feeder, aqueous urea solution in the tank 15 is pumped to be supplied to the piping 14 and the addition valve 17 by rotating the pump 16 in a normal direction, while the aqueous urea solution in the addition valve 17 and the piping 14 is recovered to the tank 15 by rotating the pump 16 in a reverse direction.

The additive feeder is further provided with an electronic control unit 21 for performing various controls on the internal combustion engine 1. The electronic control unit 21 includes a CPU that executes various computation processes related to various types of the controls, a ROM storing programs and data necessary for the control, a RAM for temporarily storing the computation results of the CPU, and input and output ports for inputting and outputting signals between the outside and the electronic control unit 21.

Various sensors shown below are connected to an input port of the electronic control unit 21, including:
- a vehicle speed sensor 22 that detects the running speed (vehicle speed) of the vehicle;
- an ambient temperature sensor 23 that detects the temperature (ambient air temperature T2) of ambient air outside the vehicle;
- an ignition switch 36 manually operated by a driver at the time of starting or stopping an operation of the internal combustion engine 1;
- an accelerator position sensor 24 that detects the operation amount of an accelerator pedal 19 (accelerator operation amount), which is operated by the driver of the vehicle;
- an air flow meter 25 that detects the amount of air passing through the intake passage 3;
- an intake pressure sensor 26 that detects the pressure (intake pressure) at a section downstream the intake throttle valve 6 in the intake passage 3;
- a crank position sensor 27 for detecting rotation speed of a crankshaft 20 of the internal combustion engine 1;
- an exhaust gas temperature sensor 28 that detects the temperature of the exhaust gas (exhaust gas temperature T3) upstream the first NOx purification catalyst 11 in the exhaust passage 8;
- an NOx sensor 29 that detects the amount of the NOx in the exhaust gas upstream the first NOx purification catalyst 11 in the exhaust passage 8;
- a pressure sensor 30 that detects the pressure of the aqueous urea solution supplied to the addition valve 17, more specifically the pressure P in the piping 14; and
- a temperature sensor 31 that detects the temperature T of a predetermined portion in a flow path of aqueous urea solution from within the pump 16 to within the addition valve 17 including an inside of the piping 14.

A drive circuit of the fuel injection valves 7, a drive circuit of the intake throttle valve 6, a drive circuit of the pump 16, and a drive circuit of the addition valve 17, and the like are connected to an output port of the electronic control unit 21.

The electronic control unit 21 grasps the operating state of the internal combustion engine 1 on the basis of the detected signals supplied from the above described sensors. According to the grasped operating state, the electronic control unit 21 supplies command signals to the drive circuits of the devices connected to the output port. Accordingly, the control of injecting the fuel, the control of opening the intake throttle valve 6, the control of driving the pump 16, the control of driving the addition valve 17, and the like in the internal combustion engine 1 are performed through the electronic control unit 21. In the control of driving the above described pump 16, the pump 16 is rotated in the normal direction to supply aqueous urea solution to the addition valve 17 while the internal combustion engine 1 is driven. In contrast, when the internal combustion engine 1 is stopped, the pump 16 is rotated in the reverse direction for a certain period to recover the aqueous urea solution in the addition valve 17 and the piping 14. The electronic control unit 21 when the pump 16 is driven to recover aqueous urea solution described above serves as a control unit for performing the recovery process in which the additive is recovered from the addition valve 17 and the piping 14 by rotating the pump 16.

When the recovery of aqueous urea solution is excessively performed by rotating the pump 16 in the reverse direction in the above described recovery process, not only the aqueous urea solution in the addition valve 17 and the piping 14 but also the exhaust gas in the exhaust passage 8 is likely to be drawn in by the pump 16. When the exhaust gas in the exhaust passage 8 is drawn in by the pump 16 as described above, the pump 16 is caused to idle, or foreign matter in the exhaust gas is caught by the pump 16 to cause lowering of the durability of the pump 16. When the temperature detected by the temperature sensor 31 becomes greater than or equal to a threshold value ε while the above described recovery process for recovering aqueous urea solution is performed, the above described recovery process is terminated to deal with the above described lowering of the durability of the pump 16. It is preferable that the above described threshold value ε be set as a temperature higher than the possible range of the temperature of the aqueous urea solution supplied to the addition valve 17, namely a temperature sufficiently high such that it cannot be caused other than the case where the exhaust gas in the exhaust passage 8 is drawn in by the addition valve 17 and the piping 14. It is preferable that the above described temperature sensor 31 be provided at predetermined portions in the flow path of the aqueous urea solution from within the pump 16 to within the addition valve 17 including the inside of the piping 14, such as a portion in the above described pump 16 connected to the piping 14, or a portion in the above described piping 14 connected to the pump 16.

Next, an operation of the additive feeder will be described.

The aqueous urea solution in the tank 15 is pumped by rotating the pump 16 in the normal direction, and supplied to the piping 14 and the addition valve 17 to add the aqueous urea solution through the addition valve 17 to the exhaust passage 8 while the internal combustion engine 1 is operated. In contrast, when the internal combustion engine 1 is stopped, the pump 16 is rotated in the reverse direction through the execution of the recovery process for recovering the aqueous urea solution in the addition valve 17 and the piping 14 to the tank 15. Aqueous urea solution is drawn in by the pump 16 by rotating the pump 16 in the reverse direction, and the exhaust gas at high temperature in the exhaust passage 8 is drawn into the addition valve 17 and the piping 14. During the execution of the above described recovery process for recovering aqueous urea solution, when the temperature T detected by the temperature sensor 31 becomes a high value greater than or equal to the threshold value ε, namely when fluid with a temperature to be detected by the temperature sensor 31 at a portion in which the temperature sensor 31 is provided is changed from aqueous urea solution to the exhaust gas with a temperature higher than that of the aqueous urea solution, the above described recovery process is terminated to stop the reverse rotation of the pump 16. Accordingly, after the exhaust gas in the exhaust passage 8 is drawn in by the addition valve 17 and the piping 14 accompanying the recovery of the aqueous urea solution by rotating the pump 16 in the reverse direction, the above described recovery process is terminated by actually confirming, on the basis of the temperature detected by the temperature sensor 31, that such exhaust gas has reached the above described position in which the temperature sensor 31 is provided. The recovery process is terminated as above described to limit the vacuuming of the exhaust gas into the pump 16, which has been drawn in from the exhaust passage 8 to the addition valve 17 and the piping 14 during the execution of the above described recovery process.

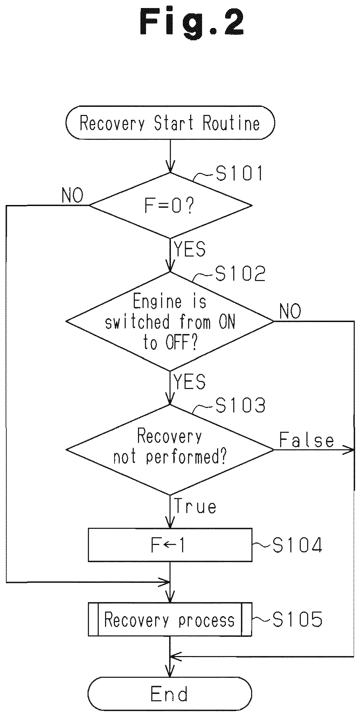

Fig. 2 is a flowchart illustrating a recovery start routine for starting the above described recovery of the aqueous urea solution. The recovery start routine is periodically executed as an interrupt by the electronic control unit 21, for example, at predetermined time intervals.

As a process of step S101 of the routine, the electronic control unit 21 determines whether or not a flag F for determining whether or not the recovery of aqueous urea solution according to the above described recovery process is performed is zero (showing that the process is not being executed). When the recovery of aqueous urea solution is not being performed, namely the flag F is zero, the electronic control unit 21 performs the processes of next steps S102 and S103. More specifically, as the process of step S102, the electronic control unit 21 determines whether or not the internal combustion engine 1 has been switched from ON to OFF on the basis of the change of the ignition switch 36 from an ON signal to an OFF signal, and determines whether the recovery of aqueous urea solution has not yet been performed as the process of step S103 after the internal combustion engine 1 is switched from ON to OFF.

The electronic control unit 21 temporarily terminates the recovery start routine if the determination result is false in either step S102 or S103. In contrast, if the determination result is true in both of steps S102 and S103, the flag F is set as one (showing that the recovery is being performed) as a process of step S104, and then the above described recovery process is performed to recover the aqueous urea solution in the addition valve 17 and the piping 14 to the tank 15 as a process of step S105. When the flag F is set as one as described above, the determination result is false in the process of step S101. Accordingly, the processes in steps S102 to S104 are skipped so that the process proceeds to step S105. The above described flag F is set as zero after the above described recovery of aqueous urea solution is performed through the recovery process in step S105 and the recovery is completed.

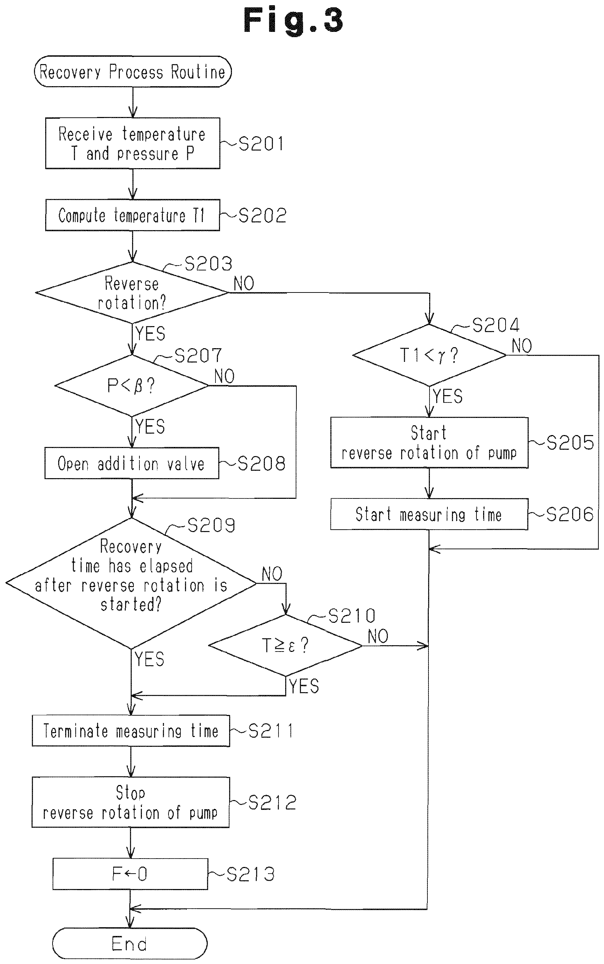

Fig. 3 is a flowchart showing the recovery process routine performed through the electronic control unit 21 each time the process proceeds to step S105 in the recovery start routine in Fig. 2.

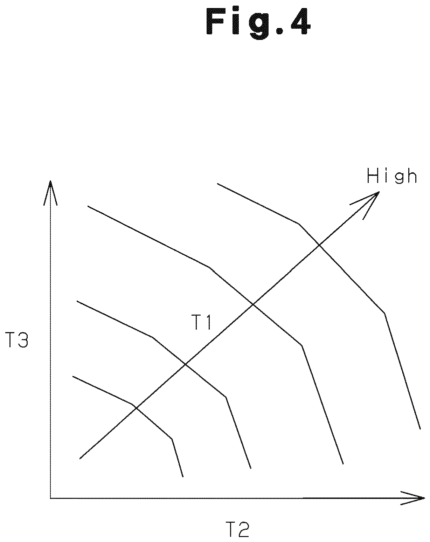

The electronic control unit 21 receives the temperature T detected by the temperature sensor 31 and the pressure P detected by the pressure sensor 30 as a process in step S201 in the routine. Thereafter, the electronic control unit 21 computes the temperature T1 of the addition valve 17 on the basis of the ambient air temperature T2 detected by the ambient temperature sensor 23 and the exhaust gas temperature T3 detected by the exhaust gas temperature sensor 28 as a process in step S202. The computed temperature T1 varies with respect to the variation of the ambient air temperature T2 and the variation of the exhaust gas temperature T3 as shown in Fig. 4, for example. That is, the lower the ambient air temperature T2 is, the lower the temperature T1 becomes, and the higher the exhaust gas temperature T3 is, the higher the temperature T1 becomes.

The electronic control unit 21 determines whether the pump 16 is rotating in the reverse direction as a process of the following step S203. If the determination result is false in step S203, the process proceeds to step S204 to determine whether or not the temperature T1 of the addition valve 17 corresponds to a low value below a threshold value γ. If the above described temperature T1 is greater than or equal to the threshold value γ, the electronic control unit 21 temporarily terminates the recovery process routine. In contrast, if the above described temperature T1 corresponds to a low value below the threshold value γ, the electronic control unit 21 rotates the pump 16 in the reverse direction as a process of step S205, and then starts measuring time from when the above described reverse rotation is started as a process of step S206. When the reverse rotation of the pump 16 is started as described above, the determination result is true in the process of step S203 so that the process proceeds to step S207.

The electronic control unit 21 determines whether or not the pressure P detected by the pressure sensor 30 corresponds to a low value below a certain value β as a process of step S207. If the above described pressure P corresponds to a low value below the certain value β through the above described reverse rotation of the pump 16, the electronic control unit 21 opens the addition valve 17 as a process of step S208. The addition valve 17 is opened as described above so that the aqueous urea solution present in the addition valve 17 and the piping 14 is effectively recovered in the tank 15 through the above described reverse rotation of the pump 16. Further, when the addition valve 17 is opened as described above, the exhaust gas in the exhaust passage 8 is drawn in by the addition valve 17 and the piping 14 accompanied by the above described recovery of aqueous urea solution. It is considered that a value intended to limit leakage of aqueous urea solution when the addition valve 17 is opened is used as the certain value β used in above step S207.

After the process in above step S208 is performed, or the determination result is false in above step S207, the process proceeds to step S209. The electronic control unit 21 determines whether or not recovery time t from when the reverse rotation of the pump 16 is started has elapsed as a process of step S209. If the determination result is false in step S209, the process proceeds to step S210 to determine whether or not the temperature T detected by the temperature sensor 31 corresponds to a high value greater than or equal to the threshold value ε. If the determination result is false in both of steps S209 and S210, the electronic control unit 21 temporarily terminates the recovery process routine. In contrast, if the determination result is true in either step S209 or S210, the electronic control unit 21 terminates the measurement of the time from when the above described reverse rotation of the pump 16 is started as a process of step S211, and stops the reverse rotation of the pump 16 as a process of step S212. Further, the electronic control unit 21 sets the above described flag F for determining whether or not the recovery of aqueous urea solution is performed as zero as a process of step S213, and then terminates the recovery process routine.

Accordingly, during a period until the recovery time t from when the above described reverse rotation is started has elapsed, the above described recovery process, namely the recovery of the aqueous urea solution to the tank 15 by the reverse rotation of the pump 16 is terminated when the temperature T detected by the temperature sensor 31 becomes a high value greater than or equal to the threshold value ε. The temperature T detected by the temperature sensor 31 being a high value greater than or equal to the threshold value ε indicates that the fluid with a temperature to be detected by the temperature sensor 31 at a portion in which the temperature sensor 31 is provided has changed from the aqueous urea solution to the exhaust gas with a temperature higher than that of the aqueous urea solution. Accordingly, the recovery of aqueous urea solution by the reverse rotation of the pump 16 is terminated by terminating the above described recovery process so that the exhaust gas in the exhaust passage 8 to be drawn into the addition valve 17 and the piping 14 according to the reverse rotation of the pump 16 is restricted from reaching the pump 16. In contrast, even if the temperature T detected by the temperature sensor 31 is below the threshold value ε, the above described recovery process is terminated so that the above described recovery of aqueous urea solution is terminated when the recovery time t from when the reverse rotation of the pump 16 to recover aqueous urea solution is started has elapsed. It is preferable that the above described recovery time t be set as an optimal value according to experiments in advance as a value for restricting the pump 16 such that the pump 16 is restricted from rotating in the reverse direction for a long time.

The above described embodiment has the following advantages.
(1) During the execution of the recovery process for recovering the aqueous urea solution in the addition valve 17 and the piping 14 into the tank 15, when the temperature T detected by the temperature sensor 31 becomes a high value greater than or equal to the threshold value ε, namely when fluid with a temperature to be detected by the temperature sensor 31 is changed from aqueous urea solution to the exhaust gas with a temperature higher than that of the aqueous urea solution, the above described recovery process is terminated. Accordingly, after the exhaust gas in the exhaust passage 8 is drawn in by the addition valve 17 and the piping 14 accompanying the recovery of aqueous urea solution by rotating the pump 16 in the reverse direction in the above described recovery process, the above described recovery process is terminated by actually confirming, on the basis of the temperature detected by the temperature sensor 31, that such exhaust gas has reached the above described position in which the temperature sensor 31 is provided. The recovery process is terminated as above described to limit the vacuuming of the exhaust gas into the pump 16, which has been drawn in from the exhaust passage 8 to the addition valve 17 and the piping 14 during the execution of the above described recovery process.
(2) The above described temperature sensor 31 is provided at a portion in the pump 16 connected to the piping 14, or a portion in the piping 14 connected to the pump 16. In these cases, when the exhaust gas in the exhaust passage is drawn in by the addition valve 17 and the piping 14 and reaches the connection portion between the pump 16 and the piping 14 while the pump 16 is being rotated in the reverse direction by the above described recovery process for recovering the additive in the addition valve 17 and the piping 14, this is reflected on the absolute value of the temperature T detected by the temperature sensor 31. That is, the temperature T becomes greater than or equal to the threshold value ε. At this time, the recovery of the aqueous urea solution present in the addition valve 17 and the piping 14 has been substantially completed by the reverse rotation of the pump 16 so that the above described recovery process is terminated to stop the reverse rotation of the pump 16 in such a state.

### Second Embodiment

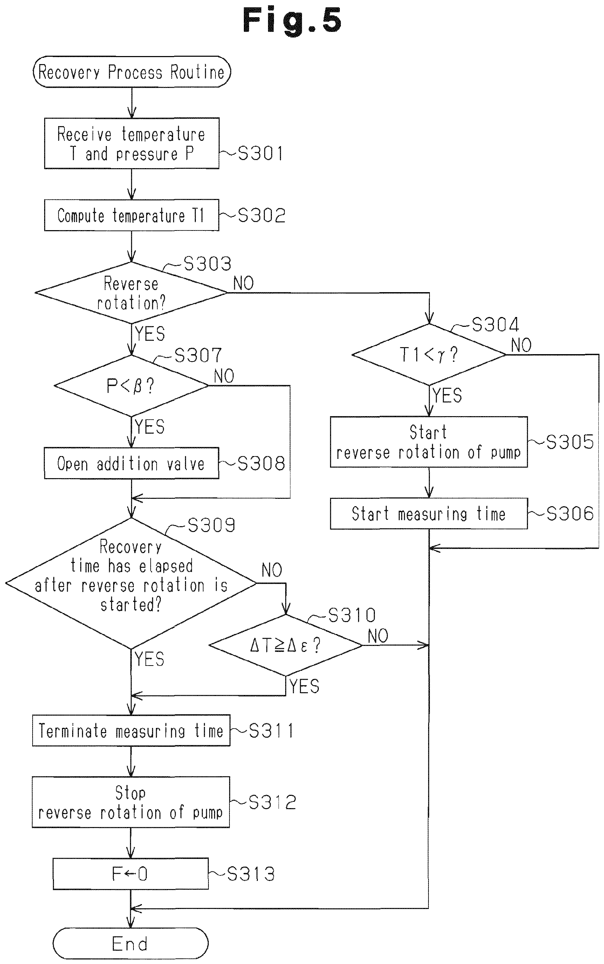

Hereinafter, an additive feeder according to a second embodiment will be described with reference to Fig. 5.

Fig. 5 is a flowchart showing a recovery process routine according to the present embodiment. The recovery process routine is also performed through the electronic control unit 21 each time the process proceeds to step S105 in the recovery start routine of Fig. 2 according to the first embodiment. The recovery process routine (Fig. 5) of the present embodiment differs from the recovery process routine of Fig. 3 according to the first embodiment only in the process (step S310) corresponding to step S210 of the recovery process routine of Fig. 3.

The electronic control unit 21 receives the temperature T and the pressure P in step S301 of the recovery process routine of Fig. 5, and then computes the temperature T1 of the addition valve 17 in step S302. Thereafter, if the determination result is false in the determination process of step S303 on the basis of a fact that the pump 16 is not rotating in the reverse direction, the electronic control unit 21 rotates the pump 16 in the reverse direction when the temperature T1 of the addition valve 17 corresponds to a low value below the threshold value γ, and starts measuring the time from when the reverse rotation is started in processes of step S304 to S306. In contrast, if it is determined that the pump 16 is rotating in the reverse direction in the determination process of step S303, the electronic control unit 21 opens the addition valve 17 on the basis of the fact that the pressure P is below the certain value β in processes of steps S307 and S308.

Further, as a process of step S309, the electronic control unit 21 determines whether or not the recovery time t from when the reverse rotation of the pump 16 is started has elapsed. If the determination result is false in step S309, the process proceeds to step S310 to determine whether or not the rate of increase ΔT of the temperature T detected by the temperature sensor 31 corresponds to a high value greater than or equal to the threshold value Δε. It is preferable that the above described threshold value Δε be set as a high rate of increase of the temperature that can be caused only when the fluid passing around the temperature sensor 31 is switched from aqueous urea solution to the exhaust gas. If the determination result is true in either step S309 or S310, the electronic control unit 21 terminates the measurement of the time from when the above described reverse rotation of the pump 16 is started, stops the reverse rotation of the pump 16, and further sets the flag F as zero (stop) as processes of steps S311 to S313.

Accordingly, during a period until the recovery time t from when the above described reverse rotation is started has elapsed, the above described recovery process, namely the recovery of aqueous urea solution to the tank 15 by the reverse rotation of the pump 16 is terminated when the rate of increase ΔT of the temperature T detected by the temperature sensor 31 becomes a high value greater than or equal to the threshold value Δε. The rate of increase ΔT of the temperature T detected by the temperature sensor 31 being a high value greater than or equal to the threshold value Δε indicates that the fluid with a temperature to be detected by the temperature sensor 31 at a portion in which the temperature sensor 31 is provided has changed from aqueous urea solution to the exhaust gas with a temperature higher than that of the aqueous urea solution. Accordingly, the recovery of aqueous urea solution by the reverse rotation of the pump 16 is terminated by terminating the above described recovery process so that the exhaust gas in the exhaust passage 8 to be drawn into the addition valve 17 and the piping 14 according to the reverse rotation of the pump 16 is restricted from reaching the pump 16.

The above described embodiment has the following advantages.
(3) During the execution of the recovery process for recovering aqueous urea solution into the tank 15, when the rate of increase ΔT of the temperature T detected by the temperature sensor 31 becomes a high value greater than or equal to the threshold value Δε, namely when fluid with a temperature to be detected by the temperature sensor 31 is changed from aqueous urea solution to the exhaust gas with a temperature higher than that of the aqueous urea solution, the above described recovery process is terminated. Accordingly, after the exhaust gas in the exhaust passage 8 is drawn in by the addition valve 17 and the piping 14 accompanying the recovery of aqueous urea solution by rotating the pump 16 in the reverse direction in the above described recovery process, the above described recovery process is terminated by actually confirming, on the basis of the temperature detected by the temperature sensor 31, that such exhaust gas has reached the above described position in which the temperature sensor 31 is provided. The recovery process is terminated as above described to limit the vacuuming of the exhaust gas into the pump 16, which has been drawn in from the exhaust passage 8 to the addition valve 17 and the piping 14 during the execution of the above described recovery process.
(4) The above described temperature sensor 31 is provided at a portion in the pump 16 connected to the piping 14, or a portion in the piping 14 connected to the pump 16. In these cases, when the exhaust gas in the exhaust passage is drawn in by the addition valve 17 and the piping 14 and reaches the connection portion between the pump 16 and the piping 14 while the pump 16 is being rotated in the reverse direction by the above described recovery process for recovering the additive in the addition valve 17 and the piping 14, this is reflected on the rate of increase ΔT of the temperature T detected by the temperature sensor 31. That is, the rate of increase ΔT of the temperature T becomes greater than or equal to the threshold value Δε. At this time, the recovery of the aqueous urea solution present in the addition valve 17 and the piping 14 has been substantially completed by the reverse rotation of the pump 16 so that the above described recovery process is terminated to stop the reverse rotation of the pump 16 in such a state.

### Third Embodiment

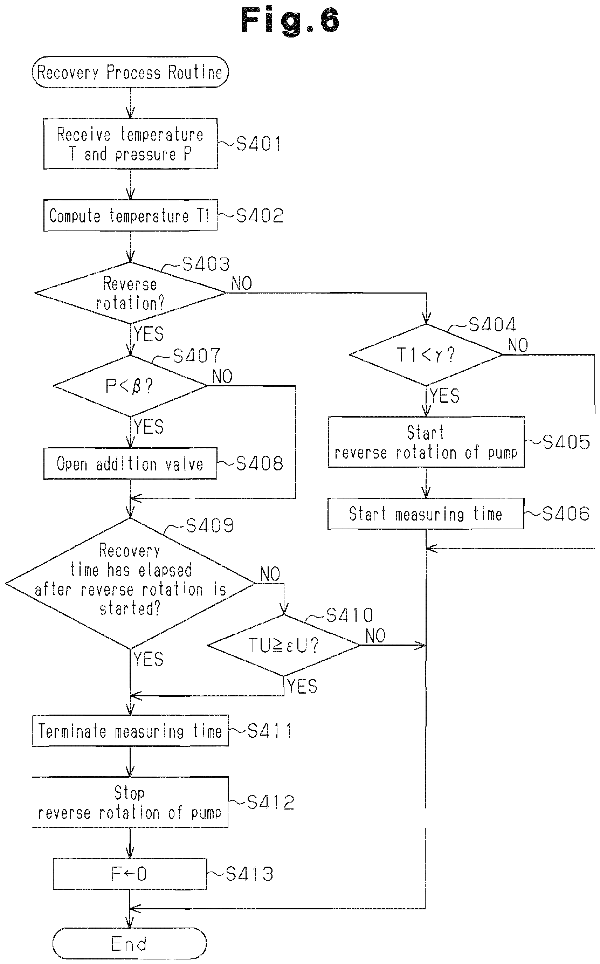

Hereinafter, an additive feeder according to a third embodiment will be described with reference to Fig. 6.

Fig. 6 is a flowchart showing a recovery process routine according to the present embodiment. The recovery process routine is also performed through the electronic control unit 21 each time the process proceeds to step S105 in the recovery start routine of Fig. 2 according to the first embodiment. The recovery process routine (Fig. 6) of the present embodiment differs from the recovery process routine of Fig. 3 according to the first embodiment only in the process (step S410) corresponding to step S210 of the recovery process routine of Fig. 3.

The electronic control unit 21 receives the temperature T and the pressure P in step S401 of the recovery process routine of Fig. 6, and then computes the temperature T1 of the addition valve 17 in step S402. Thereafter, if the determination result is false in the determination process of step S403 on the basis of the fact that the pump 16 is not rotating in the reverse direction, the electronic control unit 21 rotates the pump 16 in the reverse direction when the temperature T1 of the addition valve 17 corresponds to a low value below the threshold value γ, and starts measuring the time from when the reverse rotation is started in processes of step S404 to S406. In contrast, if it is determined that the pump 16 is rotating in the reverse direction in the determination process of step S403, the electronic control unit 21 opens the addition valve 17 on the basis of the fact that the pressure P is below the certain value β in processes of steps S407 and S408.

Further, as a process of step S409, the electronic control unit 21 determines whether or not the recovery time t from when the reverse rotation of the pump 16 is started has elapsed. If the determination result is false in step S409, the process proceeds to step S410 to determine whether or not an amount of increase TU of the temperature T detected by the temperature sensor 31 with respect to a value obtained at a time of starting the recovery of aqueous urea solution by the recovery process corresponds to a high value greater than or equal to the threshold value εU. It is preferable that the above described threshold value εU be set as a high amount of increase of the temperature which can be caused only when the fluid passing around the temperature sensor 31 is switched from aqueous urea solution to the exhaust gas. If the determination result is true in either step S409 or S410, the electronic control unit 21 terminates the measurement of the time from when the above described reverse rotation of the pump 16 is started, stops the reverse rotation of the pump 16, and further sets the flag F as zero (stop) as processes of steps S411 to S413.

Accordingly, during a period until the recovery time t from when the above described reverse rotation is started has elapsed, the above described recovery process, namely the recovery of aqueous urea solution to the tank 15 by the reverse rotation of the pump 16 is terminated when the amount of increase TU of the temperature T detected by the temperature sensor 31 with respect to a value obtained at a time of starting the recovery of aqueous urea solution by the recovery process becomes a high value greater than or equal to the threshold value εU. The amount of increase TU of the temperature T detected by the temperature sensor 31 with respect to a value obtained at a time of starting the recovery of aqueous urea solution by the recovery process being a high value greater than or equal to the threshold value εU indicates that the fluid with a temperature to be detected by the temperature sensor 31 at a portion in which the temperature sensor 31 is provided changes from aqueous urea solution to the exhaust gas with a temperature higher than that zero of aqueous urea solution. Accordingly, the recovery of aqueous urea solution by the reverse rotation of the pump 16 is terminated by terminating the above described recovery process so that the exhaust gas in the exhaust passage 8 to be drawn into the addition valve 17 and the piping 14 according to the reverse rotation of the pump 16 is restricted from reaching the pump 16.

The above described embodiment has the following advantages.
(5) During the execution of the recovery process for recovering aqueous urea solution into the tank 15, when the amount of increase TU of the temperature T detected by the temperature sensor 31 becomes a high value greater than or equal to the threshold value εU, namely when fluid with a temperature to be detected by the temperature sensor 31 is changed from aqueous urea solution to the exhaust gas with a temperature higher than that of aqueous urea solution, the above described recovery process is terminated. Accordingly, after the exhaust gas in the exhaust passage 8 is drawn in by the addition valve 17 and the piping 14 accompanying the recovery of aqueous urea solution by rotating the pump 16 in the reverse direction in the above described recovery process, the above described recovery process is terminated by actually confirming, on the basis of the temperature detected by the temperature sensor 31, that such exhaust gas has reached the above described position in which the temperature sensor 31 is provided. The recovery process is terminated as above described to limit the vacuuming of the exhaust gas into the pump 16, which has been drawn in from the exhaust passage 8 to the addition valve 17 and the piping 14 during the execution of the above described recovery process.
(6) The above described temperature sensor 31 is provided at a portion in the pump 16 connected to the piping 14 or a portion in the piping 14 connected to the pump 16. In these cases, when the exhaust gas in the exhaust passage is drawn in by the addition valve 17 and the piping 14 and reaches the connection portion between the pump 16 and the piping 14 while the pump 16 is being rotated in the reverse direction by the above described recovery process for recovering the additive in the addition valve 17 and the piping 14, this is reflected on the amount of increase TU of the temperature detected by the temperature sensor 31. That is, the amount of increase TU of the temperature T becomes greater than or equal to the threshold value εU. At this time, the recovery of the aqueous urea solution present in the addition valve 17 and the piping 14 has been substantially completed by the reverse rotation of the pump 16 so that the above described recovery process is terminated to stop the reverse rotation of the pump 16 in such a state.

### Other Embodiments

The above embodiments may be modified as follows, for example.
- In the first to third embodiments, the reverse rotation of the pump 16 may be intermittently performed immediately before terminating the recovery process accompanied by the completion of the recovery of aqueous urea solution. That is, the pump 16 rotating in the reverse direction may be intermittently stopped. The intermittent stop of the pump 16 as described above may be performed over the entire period in which the recovery process is performed.
- In the first to third embodiments, the position in which the temperature sensor 31 is provided may be appropriately changed to other positions such as a position apart from the connection portion in the piping 14 with the pump 16.
- In the first embodiment, the process of step S209 of the recovery process routine of Fig. 3 may be omitted. Alternatively, the process of step S210 may be performed after the steps of S207 and S208. In this case, the termination of the recovery process for recovering aqueous urea solution is performed on the basis of only a fact that the temperature T detected by the temperature sensor 31 is greater than or equal to the threshold value ε. Accordingly, in the state where the above described recovery of aqueous urea solution is not completed when the recovery time t from when the reverse rotation of the pump 16 is started has elapsed, the recovery process is not terminated to stop reverse rotation of the above described the pump 16. This prevents incomplete recovery of aqueous urea solution due to termination of the recovery process.
- In the second embodiment, the process of step S309 of the recovery process routine of Fig. 5 may be omitted. Alternatively, the process of step S310 may be performed after the steps of S307 and S308. In this case, the termination of the recovery process for recovering aqueous urea solution is performed on the basis of only a fact that the rate of increase ΔT of the temperature T detected by the temperature sensor 31 is greater than or equal to the threshold value Δε. Accordingly, in the state where the above described recovery of aqueous urea solution is not completed when the recovery time t from when the reverse rotation of the pump 16 is started has elapsed, the recovery process is not terminated to stop the reverse rotation of the pump 16. This prevents incomplete recovery of aqueous urea solution due to termination of the recovery process.
- In the third embodiment, the process of step S409 of the recovery process routine of Fig. 6 may be omitted. Alternatively, the process of step S410 may be performed after the steps of S407 and S408. In this case, the termination of the recovery process for recovering aqueous urea solution is performed on the basis of only a fact that the amount of increase TU of the temperature T detected by the temperature sensor 31 is greater than or equal to the threshold value εU. Accordingly, in the state where the above described recovery of aqueous urea solution is not completed when the recovery time t from when the reverse rotation of the pump 16 is started has elapsed, the recovery process is not terminated to stop the reverse rotation of the pump 16. This prevents incomplete recovery of aqueous urea solution due to termination of the recovery process.
- In each of the above described embodiments, the temperature T1 of the addition valve 17 may be obtained through measurement by the temperature sensor.
- In each of the above described embodiments, a reducing agent solution other than aqueous urea solution may be used.

### Description of the Reference Numerals

1...Internal Combustion Engine, 2... Combustion Chamber, 3...Intake Passage, 4...Turbocharger, 4a... Compressor Wheel, 4b...Turbine Wheel, 5...Intercooler, 6...Intake Throttle Valve, 7... Fuel Injection Valve, 8... Exhaust Passage, 9... First Oxidation Catalyst, 10...Filter, 11...First NOx Purification Catalyst, 12...Second NOx Purification Catalyst, 13... Second Oxidation Catalyst, 14... Piping, 15...Tank, 16...Pump, 17...Addition Valve, 18... Dispersion Plate, 19...Accelerator Pedal, 20... Crankshaft, 21... Electronic Control Unit, 22... Vehicle Speed Sensor, 23...Ambient Temperature Sensor, 24...Accelerator Position Sensor, 25...Air Flow Meter, 26...Intake Pressure Sensor, 27...Crank Position Sensor, 28... Exhaust Gas Temperature Sensor, 29... NOx Sensor, 30... Pressure Sensor, 31...Temperature Sensor, and 36...Ignition Switch.

## Claims

1. An additive feeder comprising:
an addition valve for adding an additive to an exhaust passage of an internal combustion engine;
a pump connected to the addition valve via a piping; and
a control unit configured to cause the pump to rotate to perform a recovery process to recover the additive from the addition valve and the piping, the additive feeder further comprising:
a temperature sensor provided in a flow path of the additive from within the pump to within the addition valve,
wherein the control unit is configured to terminate the recovery process when a temperature detected by the temperature sensor during the recovery process is greater than or equal to a threshold value.

2. An additive feeder, comprising:
an addition valve for adding an additive to an exhaust passage of an internal combustion engine;
a pump connected to the addition valve via a piping; and
a control unit configured to cause the pump to rotate to perform a recovery process to recover the additive from the addition valve and the piping, the additive feeder further comprising:
a temperature sensor provided in a flow path of the additive from within the pump to within the addition valve,
wherein the control unit is configured to terminate the recovery process when a rate of increase of a temperature detected by the temperature sensor during the recovery process is greater than or equal to a threshold value.

3. An additive feeder, comprising:
an addition valve for adding an additive to an exhaust passage of an internal combustion engine;
a pump connected to the addition valve via a piping; and
a control unit configured to cause the pump to rotate to perform a recovery process to recover the additive from the addition valve and the piping, the additive feeder further comprising:
a temperature sensor provided in a flow path of the additive from within the pump to within the addition valve,
wherein the control unit is configured to terminate the recovery process when an amount of increase of a temperature detected by the temperature sensor during the recovery process with respect to a value obtained at the time of starting recovery of the additive by the recovery process is greater than or equal to a threshold value.

4. The additive feeder according to any one of claims 1 to 3, wherein the temperature sensor is provided at a portion in the pump connected to the piping.

5. The additive feeder according to any one of claims 1 to 3, wherein the temperature sensor is provided at a portion in the piping connected to the pump.

## Patentansprüche

1. Additiv-Zuführer, aufweisend:
ein Beigabeventil zum Beigeben eines Additivs in einen Abgastrakt einer Verbrennungskraftmaschine;
eine Pumpe, die mit dem Beigabeventil über eine Leitung verbunden ist; und
eine Steuereinheit, die so konfiguriert ist, dass sie die Pumpe veranlasst, sich zu drehen, um einen Rückholvorgang durchzuführen, um das Additiv aus dem Beigabeventil und der Leitung zurückzuholen, wobei der Additiv-Zuführer ferner aufweist:
einen Temperatursensor, der sich in einem Strömungspfad des Additivs vom Inneren der Pumpe zum Inneren des Beigabeventils befindet,
wobei die Steuereinheit so konfiguriert ist, dass sie den Rückholvorgang beendet, wenn eine von dem Temperatursensor während des Rückholvorgangs erfasste Temperatur gleich oder größer als ein Schwellenwert ist.

2. Additiv-Zuführer, aufweisend:
ein Beigabeventil zum Beigeben eines Additivs in einen Abgastrakt einer Verbrennungskraftmaschine;
eine Pumpe, die mit dem Beigabeventil über eine Leitung verbunden ist; und
eine Steuereinheit, die so konfiguriert ist, dass sie die Pumpe veranlasst, sich zu drehen, um einen Rückholvorgang durchzuführen, um das Additiv aus dem Beigabeventil und der Leitung zurückzuholen, wobei der Additiv-Zuführer ferner aufweist:
einen Temperatursensor, der sich in einem Strömungspfad des Additivs vom Inneren der Pumpe zum Inneren des Beigabeventils befindet,
wobei die Steuereinheit so konfiguriert ist, dass sie den Rückholvorgang beendet, wenn eine Zuwachsrate einer durch den Temperatursensor während des Rückholvorgangs erfassten Temperatur gleich oder größer als ein Schwellenwert ist.

3. Additiv-Zuführer, aufweisend:
ein Beigabeventil zum Beigeben eines Additivs in einen Abgastrakt einer Verbrennungskraftmaschine;
eine Pumpe, die mit dem Beigabeventil über eine Leitung verbunden ist; und
eine Steuereinheit, die so konfiguriert ist, dass sie die Pumpe veranlasst, sich zu drehen, um einen Rückholvorgang durchzuführen, um das Additiv aus dem Beigabeventil und der Leitung zurückzuholen, wobei der Additiv-Zuführer ferner aufweist:
einen Temperatursensor, der sich in einem Strömungspfad des Additivs vom Inneren der Pumpe zum Inneren des Beigabeventils befindet,
wobei die Steuereinheit so konfiguriert ist, dass sie den Rückholvorgang beendet, wenn eine Zuwachsrate einer durch den Temperatursensor während des Rückholvorgangs erfassten Temperatur im Verhältnis zu einem Wert, der zu dem Zeitpunkt des Beginns des Rückholens des Additivs durch den Rückholvorgang erhalten wurde, gleich oder größer ist als ein Schwellenwert.

4. Additiv-Zuführer nach einem der Ansprüche 1 bis 3, wobei der Temperatursensor an einem Abschnitt in der Pumpe ausgebildet ist, der mit der Leitung verbunden ist.

5. Additiv-Zuführer nach einem der Ansprüche 1 bis 3, wobei der Temperatursensor an einem Abschnitt in der Leitung ausgebildet ist, der mit der Pumpe verbunden ist.

## Revendications

1. Dispositif d'alimentation en additif comprenant :
une soupape d'addition pour ajouter un additif à un passage d'échappement d'un moteur à combustion interne ;
une pompe raccordée à la soupape d'addition via un tuyau ; et
une unité de commande configurée pour amener la pompe à tourner afin de réaliser un processus de récupération pour récupérer l'additif de la soupape d'addition et du tuyau, le dispositif d'alimentation en additif comprenant en outre :
un capteur de température prévu dans une trajectoire d'écoulement de l'additif depuis l'intérieur de la pompe jusqu'à l'intérieur de la soupape d'addition,
dans lequel l'unité de commande est configurée pour terminer le processus de récupération lorsqu'une température détectée par le capteur de température pendant le processus de récupération est supérieure ou égale à une valeur de seuil.

2. Dispositif d'alimentation en additif comprenant :
une soupape d'addition pour ajouter un additif à un passage d'échappement d'un moteur à combustion interne ;
une pompe raccordée à la soupape d'addition via un tuyau ; et
une unité de commande configurée pour amener la pompe à tourner afin de réaliser un processus de récupération pour récupérer l'additif de la soupape d'addition et du tuyau, le dispositif d'alimentation en additif comprenant en outre :
un capteur de température prévu dans une trajectoire d'écoulement de l'additif depuis l'intérieur de la pompe jusqu'à l'intérieur de la soupape d'addition,
dans lequel l'unité de commande est configurée pour terminer le processus de récupération lorsqu'une vitesse d'augmentation d'une température détectée par le capteur de température pendant le processus de récupération est supérieure ou égale à une valeur de seuil.

3. Dispositif d'alimentation en additif comprenant :
une soupape d'addition pour ajouter un additif à un passage d'échappement d'un moteur à combustion interne ;
une pompe raccordée à la soupape d'addition via un tuyau ; et
une unité de commande configurée pour amener la pompe à tourner afin de réaliser un processus de récupération pour récupérer l'additif de la soupape d'addition et du tuyau, le dispositif en alimentation en additif comprenant en outre :
un capteur de température prévu dans une trajectoire de l'écoulement de l'additif depuis l'intérieur de la pompe jusqu'à l'intérieur de la soupape d'addition,
dans lequel l'unité de commande est configurée pour terminer le processus de récupération lorsqu'une quantité d'augmentation d'une température détectée par le capteur de température pendant le processus de récupération par rapport à une valeur obtenue au moment du début de la récupération de l'additif par le processus de récupération est supérieure ou égale à une valeur de seuil.

4. Dispositif d'alimentation en additif selon l'une quelconque des revendications 1 à 3, dans lequel le capteur de température est prévu au niveau d'une partie dans la pompe raccordée au tuyau.

5. Dispositif d'alimentation en additif selon l'une quelconque des revendications 1 à 3, dans lequel le capteur de température est prévu au niveau d'une partie dans le tuyau raccordé à la pompe.
